# EUROPEAN PATENT APPLICATION

(11) **EP 1 277 680 A1**
(43) Date of publication of application: **22.01.2003**
(21) Application number: 02077849.4
(22) Date of filing: 15.07.2002
(51) Int. Cl.: B65G 65/40, B65G 65/44

(54) **Delivery device for discharging bulk material, and treatment device provided with a discharge device of this type**

(30) Priority: 18.07.2001 NL 1018576
(71) Applicant: Wijnveen International B.V., 6991 GS Rheden (NL)
(72) Inventor: Van Der Lugt, Johannes Williebrordus, Kfar Tavor 5241 (IL)
(74) Representative: Volmer, Johannes Cornelis

(57) **Abstract**

A delivery device (20) for discharging bulk material from a reservoir (22) substantially comprises a frame (39) having a fixed grate (40) of first grate elements (42), which are located at a distance from one another leaving clear continuous first openings (60), and a grate (62) of second grate elements (64), which are located at a distance from one another leaving clear continuous second openings (78), which can move with respect to the fixed grate (40), in such a manner that the second grate elements (64) of the movable grate (62) are positioned at a distance below the first openings (60) of the fixed grate (40). The movable grate (62) is suspended resiliently from the frame (39) and is made to vibrate by a vibratory drive (70).

## Description

The invention relates firstly to a delivery device for discharging bulk material from a reservoir, which device comprises a frame having a fixed grate of first grate elements, which are located at a distance from one another leaving clear continuous first openings, and a movable grate of second grate elements, which are located at a distance from one another so as to leave clear continuous second openings, which can move with respect to the fixed grate, in such a manner that the second grate elements of the movable grate are positioned at a distance below the first openings of tie fixed grate, and a drive for moving the movable grate.

A delivery device of this type is known from NL-A-7908335 and is used, for example, to remove bulk material, such as granular materials, including cattle feed or other animal food, such as dry cat food and dog food, from a silo. In this known delivery device, a grate is of "double" design, i.e. this grate comprises two parallel grate levels which are located at a distance from one another and comprise horizontal grate elements, between which grate elements there are continuous openings. The grate elements of the first grate level are offset by half the centre-to-centre distance with respect to the grate elements of the second grate level. As a result, during operation bulk material remains in place on the grate elements of the second, lower grate level. Between the two grate levels, there is another grate with grate elements which are oriented vertically with respect to the grate levels of the first grate, the centre-to-centre distance of the vertically oriented grate elements being equal to the centre-to-centre distance of the grate elements of the double grate. Relative displacement of the two grates, preferably as a result of horizontal movement of the double grate, causes the bulk material to be pushed off the grate elements of the bottom grate level of the double grate with the aid of the stationary, vertical grate elements of the other grate.

It is often not only necessary for the bulk material to be stored in the reservoir, but also, at the same time, for a treatment, such as cooling, to be carried out on the bulk material. Cooling devices provided with a delivery device of this type are generally operated using the countercurrent principle for thermodynamic reasons, the bulk material which is to be treated moving from the top downwards in a cooling chamber through which cooling air is passed from the bottom upwards, optionally in a forced manner.

However, this known delivery device has a number of drawbacks. The movement of the two grates over one another imposes considerable mechanical loads on the bulk material, for example as a result of the material becoming jammed, which causes damage to the product. Examples of this are the product being crushed or pieces of coating, such as flakes or the like with which some dry animal foods are coated, becoming detached. Such damage is undesirable, since it affects the ultimate quality of the product. If, during residence of the bulk material in the reservoir, a treatment is also to be carried out thereon, the discharge has to be as uniform as possible, so that all the bulk material is subjected to a uniform treatment (duration, temperature, etc.). It has been found that the uniformity of the discharge of bulk material using the known device also leaves something to be desired. Bridging in the reservoir itself is another disadvantageous factor with regard to a uniform treatment. Furthermore, the known delivery device is not suitable or is less suitable for round, cylindrical reservoirs.

Furthermore, the technical field has disclosed a delivery mechanism comprising an eccentrically rotating disc, but the same drawbacks which have already been discussed above with regard to product quality and uniformity occur.

It is an object of the present invention to provide a delivery device in which the above drawbacks are reduced or eliminated.

More particularly, it is an object of the present invention to provide a delivery device in which the risk of the product being damaged is reduced. Yet another object is to provide a delivery device which allows uniform delivery, so that any product treatment in the reservoir can be carried out uniformly.

According to the invention, a delivery device of the type described above is to this end characterized in that the movable grate is suspended resiliently from the frame, and in that the drive for moving the movable grate is a vibratory drive for vibrating the movable grate.

In the present delivery device, during operation the bottom grate, which is suspended resiliently from the frame, is made to vibrate, with the result that the cones of bulk material resting on the second grate elements of the movable grate are also made to vibrate. This vibration reduces the natural slope angle of a cone of bulk material, so that the product starts to flow out in the lateral direction. The bulk material is then discharged through the second openings, which lie between the second grate elements of the movable grate, and if required can be processed further, for example received and collected. There is no damage to the bulk material as a result of it becoming jammed between grate elements, so that a uniform quality, including with regard to the particle size (distribution), is retained. In addition, the bulk material is discharged uniformly over virtually the entire bottom side of the reservoir, which allows a uniform treatment in the reservoir with regard to its duration. The delivery capacity can be continuously adjusted by controlling the vibration, such as the deflection and frequency thereof.

In the present description, the movable grate is also referred to by the term "vibratory base", and the fixed grate is also referred to as the "cone base", as will become clear below.

The distance between the cone base and the vibratory base is advantageously adjustable. During the initial filling of the reservoir, for example while a cooling device which is provided with a delivery device according to the invention is starting up, the vibratory base is pulled towards the cone base, so that there is no passage of the bulk material which is to be treated. This is because the first openings in the cone base are then covered by the second grate elements of the vibratory base. When the desired filling level in the reservoir has been reached, the vibratory base is moved downwards and its drive is started up. During operation, the distance between cone base and vibratory base is generally a few centimetres, for example 5 cm. The deflection of the vibratory base is a few millimetres.

The vibratory drive is advantageously disposed so as to vibrate the movable grate substantially in the horizontal direction. This preferred direction of vibration results in a uniform delivery of product.

The delivery device according to the invention can be used for any form of the reservoir. The delivery device can advantageously be used for polygonal or round reservoirs or treatment devices, since these are easier to clean and therefore the hygiene therein can be maintained more successfully than in the case of reservoirs which are rectangular in cross section. For use in reservoirs of this type, the grate elements are preferably annular or polygonal. More particularly, polygonal grate elements are composed of a number of segments which are secured to a common subframe for each grate or base.

The second grate elements of the vibratory base advantageously comprise plates or plate segments which lie substantially in a horizontal plane and are preferably flanged downwards through a small angle about the centre longitudinal axis thereof. This slightly sloping form of the grate elements has a beneficial effect on the discharge of the bulk material.

According to a preferred embodiment of the first grate elements of the cone base, these elements comprise an upper angle section, the corner of which is directed upwards, further side faces being located below the downwardly sloping side faces, leaving clear a gap, these further side faces preferably running substantially parallel to the downwardly sloping side faces.

This design of the first grate elements allows the bulk material to drop uniformly, substantially as a result of its own weight, onto the movable second grate elements, in the form of cones of bulk material, the vibration of the vibratory base being absorbed in the gap between the side faces and not being transmitted to the bulk material which is located at the top of the reservoir. This prevents the material from being crushed through vibration. Furthermore, gaps of this type form a good inlet for cooling air.

A second aspect of the invention relates to a treatment device for treating bulk material, in particular animal food, such as cattle feed and food for pets comprising a treatment chamber and an inlet for introducing bulk material which is to be treated into the treatment chamber, a delivery device according to the invention being provided at the bottom of the treatment chamber. This results in the advantages which have already been discussed above, in particular uniform treatment conditions, including treatment time.

To allow the bulk material which is discharged over a large section of the base with the aid of the delivery device according to the invention to be processed further centrally, a downwardly sloping conical discharge base with a central discharge opening is advantageously arranged below the movable grate.

To allow uniform filling of the treatment chamber, a distributor device for distributing the bulk material is advantageously provided beneath the inlet into the treatment chamber.

A preferred embodiment of a treatment device according to the invention is a countercurrent cooling device.

The invention is explained in more detail below with reference to the appended drawing, in which:
Fig. 1 shows a diagrammatic cross section through an embodiment of a countercurrent cooling device according to the invention;
Fig. 2 shows in more detail and in cross section the delivery device according to the invention which is used in the cooling device shown in Fig. 1;
Fig. 3 shows a cross section through components of the device shown in Fig. 2 in an exploded state;
Fig. 4 shows a plan view of an embodiment of a vibratory base of a delivery device according to the invention; and
Fig. 5 shows a plan view of an embodiment of a cone base of a delivery device according to the invention.

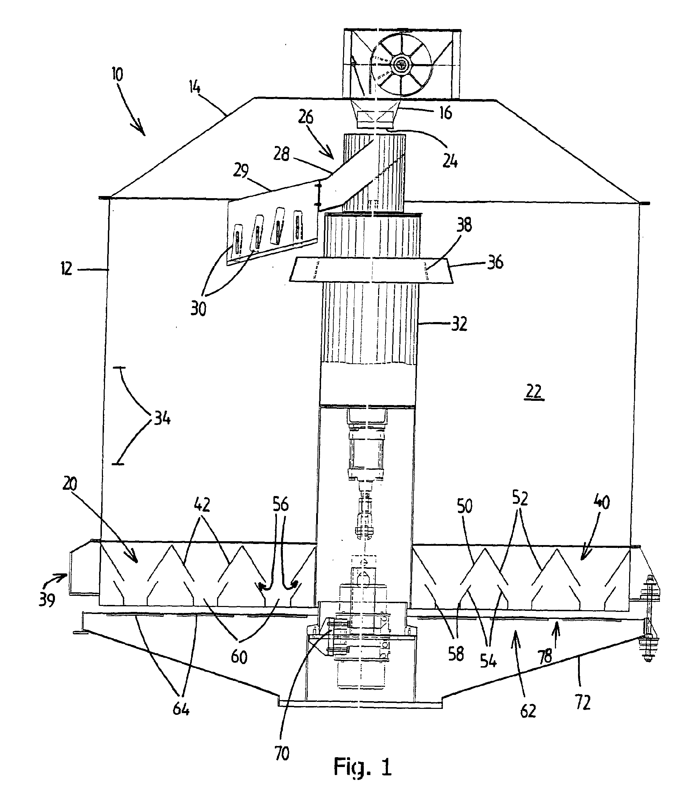

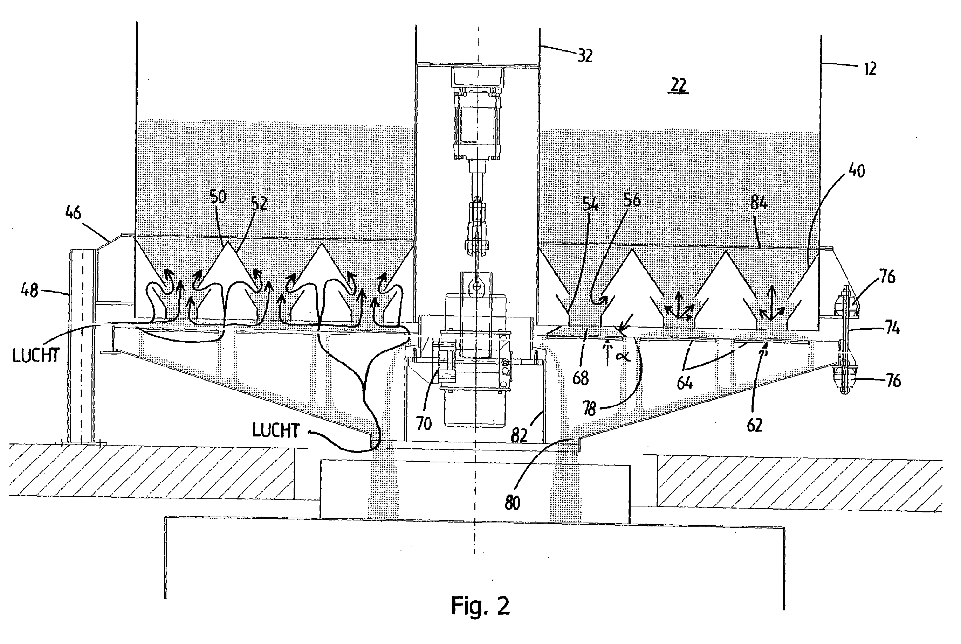

Fig. 1 diagrammatically depicts a countercurrent cooling device 10 according to the invention. The cooling device 10 comprises a housing 12, a central product-inlet opening 16 being provided in the roof 14 thereof. At the bottom of the housing 12, a delivery device 20 according to the invention is provided as the base. The housing 12 and the delivery device 20 together define a cooling chamber 22. In the embodiment which is illustrated, the central product-inlet opening 16 is in the form of a funnel. Directly below its outlet 24 there is a distributor device 26 for distributing the supplied particulate product through the cooling chamber 22. This distributor device 26 in this case comprises a distributor chute 28 (which can optionally be driven in rotation), the discharge end of which is provided with a vertical distributor plate 29. The distributor plate 29 is furthermore provided with a number of moveably arranged distributor elements 30 which extend substantially perpendicular to the distributor plate 29. The distributor device 26 is arranged on the top of a central column 32 in which, if desired, the drive device (not shown) of the distributor device 26 may be accommodated. With a view to controlling the filling level, level-measuring devices 34, which are coupled to the control unit of the drive device of the distributor device 26, may be arranged in the housing. A vertically adjustable ring 36 with support arms 38 is provided in order to deposit the supplied product in the vicinity of the central column 32 as a result of collision with the ring 36. This allows flat filling of the cooling chamber 22.

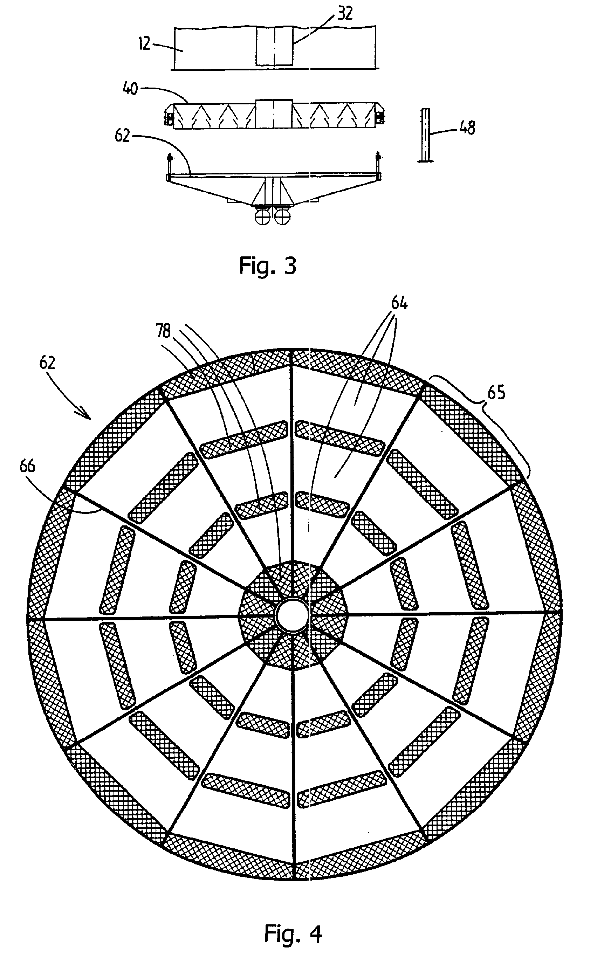

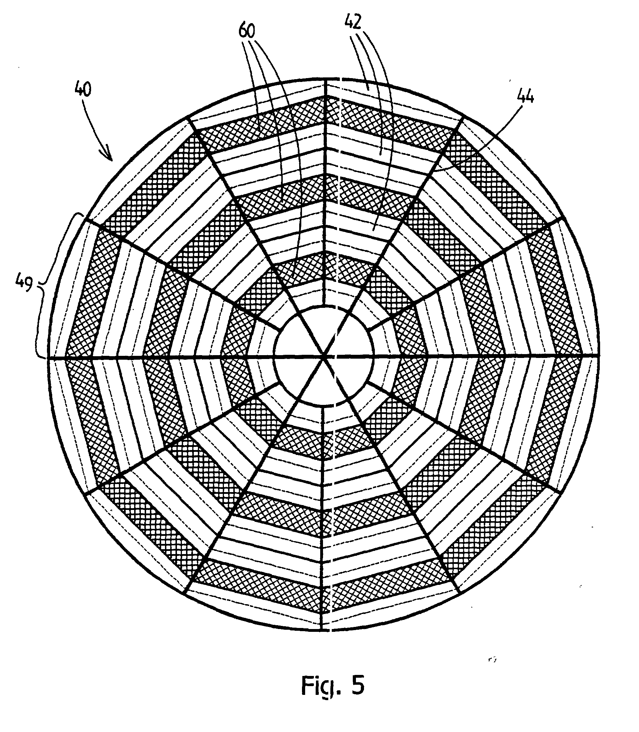

The delivery device 20 comprises a frame 39 with a fixed grate, which is denoted overall by reference numeral 40 and has fixed first grate elements 42, which are secured at a distance from one another to a subframe, which is diagrammatically illustrated in the plan view shown in Fig. 5 and is denoted by reference numeral 44. It should be noted that the open sections are hatched in the plan views shown in Figs 4 and 5. At its periphery, the subframe 44 is provided with a number of flanges 46 which are supported by support legs 48. The fixed first grate element 42 comprise segments 49 which each - apart from the outermost segments - comprise an angled apex section 50, the apex of which is directed upwards and side faces 52 of which slope downwards. Beneath this section 50 there are further side faces 54, parallel to the side faces 52, leaving clear a gap 56. The ends 58 of the side faces 54 are flanged vertically downwards and delimit continuous first openings 60. On account of this cone-like shape of the grate elements 42, the fixed grate 40 is also known as a cone base. A vibrating movable grate 62 with second grate elements 64 is arranged below and at a distance from the cone base 40, as can be seen most clearly from Figs. 2 and 3. The second grate elements 64 likewise comprise segments 65 (cf. Fig. 4) which are secured to a common subframe 66. The second grate elements 64 have larger dimensions than the first openings 60 which lie directly above them, so that cones 68 of bulk material are formed on the second grate elements 64. During operation, the subframe 66 is made to vibrate by a vibratory drive 70, which is surrounded by a conical discharge base 72. If desired, it is possible to position the drive 70 in the central column 32. To facilitate horizontal transfer of bulk material onto the second grate elements 64, these plate-like, substantially horizontal second grate elements 64 are designed to be slightly convex or are flanged downwards through a small angle (< 5°) about their central longitudinal axis. The discharge base 72 with vibratory base 62 is suspended resiliently from the flanges 46 with the aid of compressible connections in the form of studs 74 with springs or dampers 76, so that the distance between vibratory base 62 and cone base 40 can be set accurately. With the aid of piston/cylinder units (not shown), the discharge base 72 with vibratory base 62 can be pulled towards the cone base 40, so that in this position there can be no passage, as is desired, for example, during initial filling.

In the left-hand half of Fig. 2, the product and its flow are illustrated in hatched form, while the airflow is indicated by arrows. From the cooling chamber 22, the product flows through the first openings 60 onto the second grate elements 64, which have been made to vibrate, and then through the second openings 78 which lie between these elements onto the discharge base 72 with central annular discharge opening 80. The drive 70 is protected by means of a shield 82. The cooling air enters through the discharge opening 80 and, if desired, through peripheral gaps between the vibratory base 62 and cone base 40. This results in uniform discharge of the product over the entire area of the base, while the supply of cooling air is likewise uniform over the entire area of the base as a result of natural suction. If desired, air outlet openings (not shown) may be provided at the top of cooling device 10.

In the right-hand half of Fig. 2, arrows indicate that the vibration energy can be discharged into the gaps in the cone base 40. The result of this is that, inter alia, the product is only exposed to vibration for a relatively short time, since the product is rapidly discharged from this position, so that there is no crushing of the product. Another result of the discharging of the vibrations is that the product which is located above the line 84 is exposed to little or no vibration. The natural slope angle α of the bulk material is also indicated. This angle α becomes smaller when the second grate elements 64 are set in vibration, with the result that the product starts to flow out over the second grate elements 64. The rate at which it flows out is dependent on the vibration frequency and amplitude and is therefore controllable.

## Claims

1. Delivery device for discharging bulk material from a reservoir, which device comprises a frame having a fixed grate of first grate elements, which are located at a distance from one another leaving clear continuous first openings, and a movable grate of second grate elements, which are located at a distance from one another so as to leave clear continuous second openings, which can move with respect to the fixed grate, in such a manner that the second grate elements of the movable grate are positioned at a distance below the first openings of the fixed grate, and a drive for moving the movable grate, **characterized in that** the movable grate (62) is suspended resiliently from the frame (39), and **in that** the drive for moving the movable grate is a vibratory drive (70) for vibrating the movable grate (62).

2. Delivery device according to claim 1, **characterized in that** the vibratory drive (70) is disposed so as to vibrate the movable grate (62) substantially in the horizontal direction.

3. Delivery device according to claim 1 or 2, **characterized in that** the grate elements (42; 64) are substantially annular.

4. Delivery device according to one of the preceding claims, **characterized in that** the movable grate elements (64) comprise plates which substantially lie in a horizontal plane and are flanged downwards over a small angle about their centre longitudinal axis.

5. Delivery device according to one of the preceding claims, **characterized in that** the fixed grate elements (42) comprise an upper angle section (50), the corner of which is directed upwards, further side faces (54) being provided below the downwardly sloping side faces (52) of this section, leaving clear a gap (56).

6. Delivery device according to one of the preceding claims, **characterized in that** the distance between the movable grate (62) and the fixed grate (40) is adjustable.

7. Treatment device, in particular countercurrent cooling device (10), comprising a treatment chamber (22), an inlet (16) for the introduction of bulk material which is to be treated into the treatment chamber (22), and, at the underside of the treatment chamber (22), a delivery device (20) according to one of the preceding claims.

8. Treatment device according to claim 7, **characterized in that** a conical discharge base (72), which slopes downwards and has a central discharge opening (80), is provided below the movable grate (62).

9. Treatment device according to claim 7 or 8, **characterized in that** a distributor device (26) for distributing bulk material in the treatment chamber (22) is provided below the inlet (16).
